# EUROPEAN PATENT SPECIFICATION

(11) **EP 1 680 595 B1**
(45) Date of publication and mention of the grant of the patent: **27.03.2013**
(21) Application number: 04799660.8
(22) Date of filing: 05.11.2004
(51) Int. Cl.: F02N 11/08, G01P 13/04

(54) **ENGINE STARTING APPARATUS AND METHOD**
MOTORSTARTVORRICHTUNG UND -VERFAHREN
DISPOSITIF ET PROCEDE POUR LE DEMARRAGE DE MOTEUR

(30) Priority: 07.11.2003 JP 2003377923
(43) Date of publication of application: 19.07.2006
(73) Proprietor: TOYOTA JIDOSHA KABUSHIKI KAISHA, Toyota-shi, Aichi-ken, 471-8571 (JP)
(72) Inventor: ASADA, Toshiaki, C/O TOYOTA JIDOSHA KABUSHIKI KAISHA, Toyota-shi, Aichi-ken 471-8571, (JP)
(74) Representative: Kopp, Stephan
(86) International application number: PCT/JP2004/016810
(87) International publication number: WO 2005/045240

(56) References cited:
- EP-A- 1 070 964
- DE-C- 621 485
- US-A- 5 079 945
- US-B1- 6 354 257
- PATENT ABSTRACTS OF JAPAN vol. 1995, no. 09, 31 October 1995 (1995-10-31) & JP 07 158543 A (HONDA MOTOR CO LTD), 20 June 1995 (1995-06-20)
- PATENT ABSTRACTS OF JAPAN vol. 2003, no. 07, 3 July 2003 (2003-07-03) & JP 2003 083216 A (MORIC CO LTD), 19 March 2003 (2003-03-19) cited in the application

## Description

### Technical Field

The present invention relates to an engine starting apparatus which includes a starter motor and a power transmission mechanism to transmit the power from the starter motor, used in starting an engine of a vehicle, as well as an engine starting method.

### Background Art

In this type of engine starting apparatus, a crankshaft of the engine and the starter motor are connected via a one-way clutch. In the engine starting apparatus, if the engine runs in reverse rotation for some reasons, an excessive load is generated in the starter motor in some cases.

Thus, there is suggested an engine starting apparatus in which a reverse-rotation prevention clutch is mounted on an output shaft of the starter motor (e.g. refer to Japanese Patent Application Laying Open NO. 2003-83216). According to the apparatus disclosed by this application, by the action of a reverse-input cutoff clutch, a torque from the engine is not transmitted to the starter motor, regardless of the normal or reverse direction of the engine. Therefore, it is considered that even if the engine runs in the reverse rotation, the starter motor can be kept in a good condition.

Document DE 621 485 C further discloses an electric starting device for an internal combustion engine. There, if the engine causes rearward rotation due to backfire, pressure is generated in an intake manifold by such rearward rotation. Resulting thereof, a diaphragm opens respective contacts and closes respective contacts. Thus, a circuit is completed through an ignition switch, a control circuit lead, respective other leads and a spring strip to a shunt a coil, returning through the ground connection whereby the shunt coil is energized to actuate a plunger to open contacts.

### Disclosure of Invention

However, a reverse-rotation cutoff clutch transmits a torque output from the starter motor to the engine, regardless of the rotational direction of the engine. Therefore, even if the engine runs in the reverse rotation, once the starter motor is rotated, then, the torque of the starter motor is transmitted to the engine. In such circumstances, the starter motor causes the engine that is running in the reverse rotation to run in normal rotation, and an unexpected excessive load is generated in the starter motor. Because of such an excessive load, the engine starting apparatus has a risk that not only the starter motor but also even a gear and a one-way clutch, which are power transmitting devices between the starter motor and the engine, may be damaged.

It is therefore an object of the present invention to provide an engine starting apparatus and an engine starting method, which are capable of preventing the damage of a starter motor and a power transmission mechanism, caused by the reverse rotation of an engine.

The above object of the present invention can be achieved by an engine starting apparatus provided with: a motor for transmitting a torque to an engine of a vehicle to rotate the engine; and a motor controlling device for prohibiting rotation of the motor if the engine runs in reverse rotation.

The engine starting apparatus is used for an engine of a vehicle. The "vehicle" conceptually includes an automobile, a two-wheeled vehicle, a motorized bicycle, and all that is recalled generally as a vehicle whose power source is an engine. The "engine" mainly indicates an internal combustion engine, such as a gasoline engine and a diesel engine. Further, the "engine" includes an engine partially including the combustion engine, such as a hybrid engine. For example, the engine explodes and combusts fuel in a combustion chamber in a cylinder of the internal combustion engine, and moves a piston by the power of the explosion and the combustion. In general, the engine of the automobile or the like has such a construction that the reciprocating motion of the piston is converted to rotational motion via the crankshaft or the like. Incidentally, if the engine starting apparatus of the present invention is used for such an engine, it is obvious that the type of fuel, the number or volume of the cylinders, the number of cycles, and the like are not limited.

The "motor" in the engine starting apparatus is a motor for rotating the engine of the vehicle. Moreover, the "rotation" is not the rotation of the engine to run the vehicle. The "rotation" mainly indicates the rotation of the engine to start the engine that is in a stop condition. However, it is no problem if the motor plays both roles of a motor for power output and a motor for start, in the hybrid engine. Such rotation for starting the engine can be performed except during the stop of the engine in some cases, but this case is also included in the scope of the "rotation". As the rotation described above, there is the starting rotation of the engine by a starter apparatus. As the motor in this case, there is a starter motor used for the starter apparatus. When the engine is started, for example, the starter motor is electrically rotated by the power of a battery or the like, and the rotational power or torque is transmitted to the crankshaft of the engine via a proper transmitting device, to thereby mechanically rotate the engine. During the rotation, processes of fuel intake, compression, explosion, and exhaust are started, and afterward, the engine spontaneously repeats these processes without the starter apparatus, and continues the rotation until a stop command is issued, for example, until a driver stops the engine of the vehicle. Incidentally, the "proper transmitting device" is generally a transmission mechanism constructed from a combination of the gear, the one-way clutch, and the like.

In the engine starting apparatus, "if the engine runs in the reverse condition" indicates the case where the engine rotates or turns in a different direction from the direction of the starting rotation (i.e. normal rotation) obtained by the motor in the present invention. Normally, if the engine spontaneously rotates, such reverse rotation does not occur, however, during the stop of the engine, particularly, immediately after the engine stops, the reverse rotation or reverse turn likely occurs because the engine can rotate in the both direction physically. Incidentally, such reverse rotation is typically less than a half turn if converted to the rotation angle of the crankshaft, in terms of characteristics of the engine. Even a slight reverse rotation possibly causes a problem such as the increase in a load to the motor and the damage of the transmission mechanism, as described above.

The motor controlling device in the present invention performs such control that it prohibits the rotation of the motor, in the reverse rotation condition of the engine. In this case, "prohibit" means to prohibit the rotation electrically, mechanically or in accordance with a software program. Moreover, it indicates a broad conception including all of the aspects that the reverse rotation of the engine does not cause the excessive load of the motor, such as cutting off power distribution to the motor, controlling not to operate the motor in accordance with the software program, or controlling not to rotate the motor physically, or the like.

According to the engine starting apparatus, the motor does not rotate when the engine runs in the reverse rotation. Therefore, the excessive load is not generated in the motor, which likely prevents the damage of the motor. It is also possible to prevent the damage of the transmission mechanism, such as the gear or the clutch connected to the motor and the engine. Moreover, because the possibility of the damage of each member of the transmission mechanism can be lowered as described above, it is possible to construct the transmission mechanism, such as the gear between the motor and the engine, from a light and inexpensive material, such as resin, so that a significant effect can be achieved on reduction in weight and on reduction in cost.

Incidentally, the engine starting apparatus of the present invention is preferably used for the starter apparatus which operates by turning an engine key. However, the present invention can be used for other various types of apparatus.

In one aspect of the engine starting apparatus of the present invention, the engine starting apparatus is further provided with a reverse-rotation estimating device for estimating, in advance, whether or not the engine runs in the reverse rotation.

In an operation process of the engine, the incidence of the reverse rotation is extremely lower than that of the normal rotation, so in some cases, this may cause the case where the reverse rotation condition is shown only for an extremely short time. In such a case, if the reverse rotation is tried to be detected after the engine starts to run in the reverse rotation, in some cases, the reverse-rotation itself cannot be detected, or the reverse rotation is already ended at a time point of detecting the reverse rotation. However, even the rotation of the starter motor during such a short time causes the damage of the motor. "Estimate" in this aspect indicates a conception in which it is estimated whether or not the reverse rotation is generated, from a variety of mechanical, electrical, or physical conditions of the engine, experimentally, experientially, theoretically, or simulationally. By estimating the reverse rotation of the engine in advance in this manner, the rotation of the motor will be already prohibited when the engine starts to run in the reverse rotation, so that the damage of the motor is prevented.

In one aspect of the engine starting apparatus having the reverse-rotation estimating device, the reverse-rotation estimating device has a compression-condition detecting device for detecting a compression condition of a gas in an arbitrary cylinder in the engine and estimates whether or not the engine runs in the reverse rotation on the basis of the compression condition obtained by a detection result by the compression-condition detecting device.

The "gas" described here mainly means vaporized fuel. In the condition that the engine spontaneously rotates, each of the processes of intake, compression, explosion, and exhaust is repeated. In the cylinder which is in the compression process during the stop of the engine, the piston is pressed back by a reaction force of the compressed gas and the engine runs in the reverse rotation for a moment. Therefore, "the compression condition of the gas" defined in this aspect indicates two conditions, at the very least, of whether or not the piston can be pressed back by the compressed gas. Inevitablly, the "compression-condition detecting device" conceptually indicates what can judge the two conditions at the very least.

Moreover, in another aspect of the compression-condition detecting device, the compression-condition detecting device detects the compression condition of the gas on the basis of a rotation angle of a crankshaft in the arbitrary cylinder.

In the engine having such an aspect that the piston is coupled to the crankshaft, the rotation angle of the crankshaft corresponds to a process currently performed in the cylinder. Namely, if the rotation angle of the crankshaft corresponding to the compression process is known in advance, it is possible to detect the presence or absence of the cylinder which is in the compression process, from the rotation angle of the crankshaft. For example, in a normal vehicle, a crank angle is always monitored by using a crank angle sensor, to control the ignition timing of the engine. By extracting a signal from the crank angle sensor, it is possible to judge whether or not the piston is at a position where the piston is pressed back by the reaction force of the compressed gas. Moreover, with respect to the detection of the reverse rotation of the engine, the aspect of providing the two pulse sensors is explained, but if there is only a crank angle which is not accompanied by the rotational direction, the measurement can be performed by one sensor.

In another aspect of the engine starting apparatus of the present invention, the motor controlling device controls the motor to start the engine which is stopped while the vehicles stops, in accordance with a start command.

In general, such control is referred to as Economy Running (Eco-Run) control. The "stop of the vehicle" described here indicates the situation that the vehicle stops mainly during use, for example, the situation that the vehicle stops at traffic lights while driving. In the stop condition of the vehicle, the engine automatically stops under the Eco-Run control. In the engine stop condition, the engine is re-started if a predetermined action is performed. This "predetermined action" is, for example, an action of pressing an accelerator pedal by a predetermined amount. It indicates a conception including all of the aspects that the engine starting apparatus can receive the operations or actions as a command for starting the engine, namely, the above-described "start command".

Incidentally, after this predetermined action is performed, the situation that the vehicle stops and the engine is started may happen depending on circumstances, but the Eco-Run control is performed to increase the consumption efficiency of fuel, and in a range in which the effect is secured, such a situation is also included in this aspect.

Under the Eco-Run control, for example, in the case where the vehicle stops on a steep slope and the engine is stopped once, if a clutch pedal is engaged more quickly than the predetermined action for re-starting the engine, the vehicle moves backward and thus the engine may run in the reverse rotation. Namely, under the Eco-Run control, there are more chances that the reverse rotation of the engine occurs than a general vehicle, which increases the risk of the damage of the starter motor. According to this aspect, however, such a risk can be reduced significantly, so that it is efficient.

Moreover, under the Eco-Run control, the engine is repeatedly stopped and started frequently, so that if a battery of a charge type is used as the power of the engine starting apparatus, the frequency of use of the battery increases as well. In such a condition, there is a possibility that the battery becomes in an excessive discharge condition and the stopped engine cannot be started. In preparation for this case, under the Eco-Run control, such control is performed that the residual quantity of electricity accumulation of the battery is monitored, and if it reaches to a certain level, the start command is issued to start the engine, regardless of a departure command for the vehicle (for example, while the vehicle is stopped), to thereby maintain the amount of the electricity accumulation at a sufficient level. A signal output on the basis of the residual quantity of the electricity accumulation of the battery, as described above, is also included in the above-described "predetermined action" in a broad meaning.

The above object of the present invention can be also achieved by an engine starting method used for an engine starting apparatus provided with: a motor for transmitting a torque to an engine of a vehicle to rotate the engine; and a motor controlling device for prohibiting rotation of the motor if the engine runs in reverse rotation, the motor controlling device controlling the motor to start the engine which is stopped while the vehicles stops in accordance with a start command, the engine starting method provided with: a first process of receiving the start command; a second process of judging whether or not the engine runs in the reverse rotation if the start command is received; and a third process of controlling the motor to start the engine if it is judged in the second process that the engine does not run in the reverse rotation.

These functions and other advantages of the present invention will be apparent from the following description of embodiments.

### Brief Description of Drawings

FIG. 1 is a half sectional view conceptually showing a power output apparatus in an embodiment of the present invention;
FIG. 2 is a block diagram of an engine starting apparatus in the embodiment of the present invention; and.
FIG. 3 is a flowchart explaining the operation of the engine starting apparatus.

### Best Mode for Carrying Out the Invention

The best mode for carrying out the present invention will be hereinafter explained in order, with reference to the drawings.

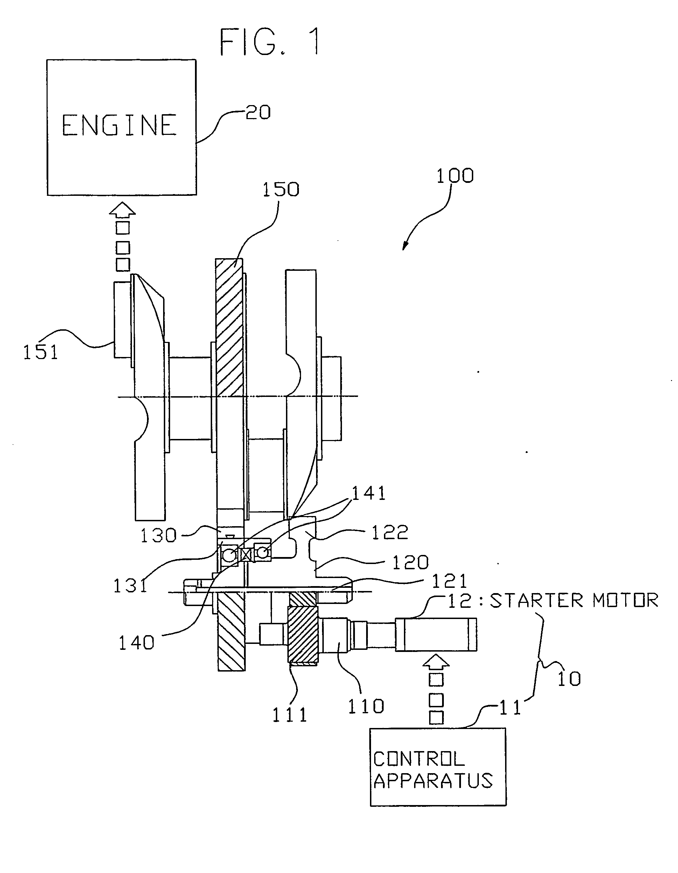

At first, the structure and operation of a power output apparatus, which includes an engine starting apparatus, a transmission mechanism, and an engine, in an embodiment of the present invention will be explained with reference to FIG. 1. FIG. 1 conceptually shows the power output apparatus.

In FIG. 1, the power output apparatus in the embodiment includes: an engine starting apparatus 10; a transmission mechanism 100; and an engine 20.

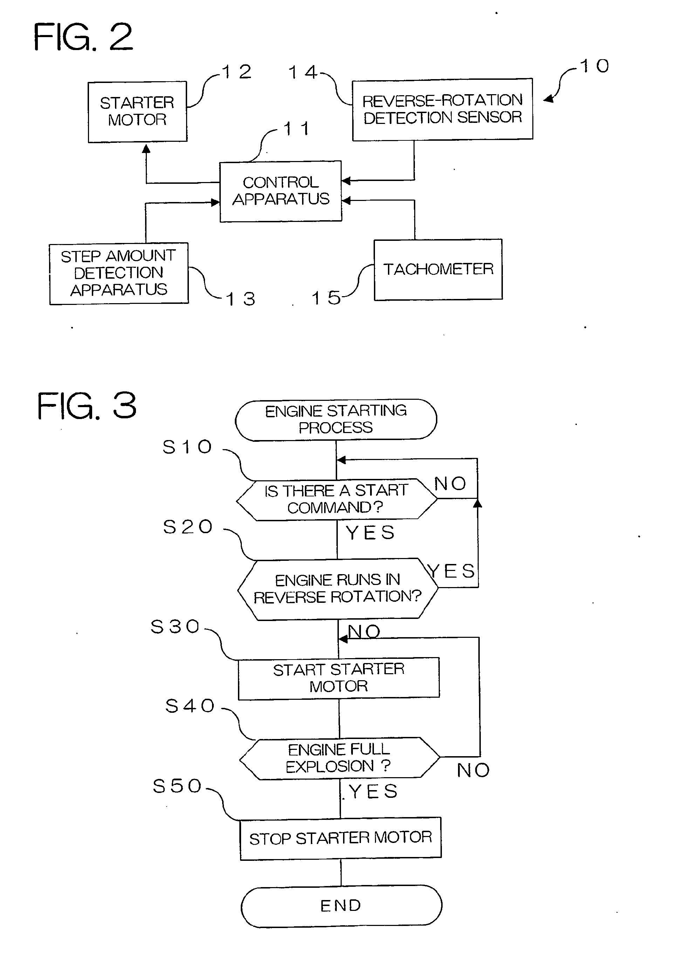

The engine starting apparatus 10 is an apparatus for rotating to start the engine 20, and is provided with: a starter motor 12 and a control apparatus 11 for controlling the start operation of the starter motor 12. The detailed structure and operation of the engine starting apparatus 10 will be described later (refer to FIG. 2 and FIG. 3).

The engine 20 is a general gasoline engine. For convenience of understanding, FIG. 1 shows only one engine 20, but a plurality of engines 20 are connected to a crankshaft 151. It is constructed such that, during combustion, pistons, connection rods and other members of the engine 20 move in the normal direction, with the rotation of the crankshaft 151.

The transmission mechanism 100 is placed between the engine starting apparatus 10 and the engine 20, and is constructed to transmit a torque output from the engine starting apparatus 10 to the engine 20 in order to start the engine 20. The transmission mechanism 100 substantially has the following structure.

A starter gear shaft 110 is a rotation shaft for inputting the torque from the starter motor 12 to the transmission mechanism 100. A starter gear 111 is fixed around the starter gear shaft 110 and can rotate with the starter gear shaft 110 in one body in the same direction.

A sub-driven gear 120 is engaged with the starter gear 111. The sub-driven gear 120 is engaged with a driven gear 122 which is fixed around a driven gear shaft 121. By the driven gear 122, the driven gear shaft 121 rotates with the driven gear 122 in the same direction.

An intermediate gear 130 is fixed around an intermediate gear shaft 131. Between the intermediate gear 130 and the driven gear 122, there is a one-way clutch 140 placed, which is supported by a bearing 141 and other supporting members.

A crank gear 150 is engaged with the intermediate gear 130. The crank gear 150 is fixed around a crankshaft 151. The crankshaft 151 rotates in accordance with the rotation of the crank gear 150. The crankshaft 151 is connected to the pistons of the engine 20 via the connection rods and other members which are not illustrated.

Under the construction described above, when the starter motor 12 of the engine starting apparatus 10 rotates in order to start the engine 20, the rotation is converted to the rotations of the starter gear 111, the driven gear 122, the one-way clutch 141, the intermediate gear 130, and the crank gear 150, and transmitted to the crank shaft 151. By the rotation of the crank shaft 151, the engine 20 starts. The direction of the rotation of the engine 20 at this time is the normal direction of the engine 20.

Next, the structure of the engine starting apparatus 10 will be explained with reference to FIG 2. FIG. 2 is a block diagram showing the engine starting apparatus 10.

In FIG. 2, the control apparatus 11 is an apparatus for controlling the operation of the engine starting apparatus 10. The starter motor 12 is a motor for starting the engine 20 and is connected to a not-illustrated power source and electric wirings. The starter motor 12 rotates in a predetermined direction by the control of the control apparatus 11. This torque is transmitted to the starter gear shaft 110 (FIG. 1).

A step-amount detection apparatus 13 is connected to a not-illustrated accelerator pedal and has a sensor function of detecting a step amount of the accelerator pedal. If the accelerator pedal is pressed by a predetermined amount or more, a start command pulse is output from the step-amount detection apparatus 13 to the control apparatus 11. The control apparatus 11 receives the start command pulse as a start command for the engine 20.

There are various techniques to detect the reverse-rotation of the engine. In the embodiment, the technique of detecting the rotational direction of the crankshaft is selected. Namely, the reverse-rotation detection sensor 14 has two rotation-pulse sensors, which are not illustrated, for detecting the rotational direction of the crankshaft 151. If detecting the reverse rotation of the engine 20, the reverse-rotation detection sensor 14 outputs a reverse-rotation detection pulse to the control apparatus 11. Moreover, a tachometer 15 is an apparatus for measuring the number of rotations or rotational speed of the engine 20.

Next, the operation of the engine starting apparatus 10 will be explained with reference to FIG. 3. FIG. 3 shows an engine starting process performed by the control apparatus 11. Incidentally, the engine starting apparatus 10 in the embodiment is used for a vehicle under the Eco-Run control. FIG 3 explains the engine starting process of starting the engine from a stop condition by the Eco-Run control.

In FIG. 3, at first, the control apparatus 11 judges the presence or absence of the engine start command (step S10). The embodiment is constructed such that the engine 20 is re-started by pressing the accelerator pedal by the predetermined amount or more. The control apparatus 11 detects the presence or absence of the start command pulse as being the output of the step-amount detection apparatus 13, at constant clock timing. If the start command pulse is not detected (the step S 10: NO), the control apparatus 11 repeats the step 10 until the start command pulse is detected. If the start command pulse is detected (the step S10: YES), the control apparatus 11 subsequently judges whether or not the engine 20 runs in the reverse rotation (step S20).

The control apparatus 11 detects the presence or absence of the reverse-rotation detection pulse as being the output of the reverse-rotation detection sensor 14. If the reverse-rotation detection pulse is detected (the step S20: YES), the control apparatus 11 regards that the engine 20 is rotating in the reverse direction, and returns the engine starting process to the step S10 again. Then, the step 10 and the step 20 are repeated until the reverse rotation ends. If the reverse-rotation detection pulse is not detected (the step S20: NO), the control apparatus 11 regards that the engine 20 is not rotating in the reverse direction, and starts power distribution to the starter motor 12, to thereby rotate the starter motor 12 (step S30).

The control apparatus 11 is connected to not-illustrated engine control apparatuses for performing the supply of fuel to the engine 20, ignition timing control and other processes. If the starter motor 12 is rotated by the step S30, the torque of the starter motor 12 is converted to the rotation of the crankshaft 151, and further converted to the reciprocating motion of the pistons. This engine control apparatus performs the supply of fuel, ignition and other necessary processes, at proper timings, during the starting rotation obtained by the engine starting apparatus 10, to thereby start the spontaneous rotation of the engine 20.

Then, the control apparatus 11 confirms the number of rotations of the engine 20 by referring to the tachometer 15, and performs a full explosion judgment (step S40). The full explosion judgment is to judge whether or not the rotation of the engine 20 is stabilized. In the embodiment, it is judged by whether or not the number of rotations of the engine 20 is more than or equal to 400 revolutions per minute (rpm) and by whether or not it does not lower than the number of the rotations of the engine during a constant period. It is obvious that this judgment standard is not limited to this aspect. If it is judged that the number of rotations of the engine 20 is not stabilized (the step S40: NO), the control apparatus 11 returns the engine starting process to the step S30, and continues the power distribution to the starter motor 12, to thereby keep the starter motor 12 rotating. If it is judged that the rotation of the engine 20 is stabilized (the step S40: YES), the control apparatus 11 cuts off the power distribution to the starter motor 12 to stop the starter motor 12 (step S50), and ends the engine starting process in the embodiment.

In the embodiment, the method of detecting the reverse-rotation of the engine is not limited to the exemplified aspect in the above-described step S20. For example, it is possible to detect the reverse-rotation of the engine in the following manner.

For example, two sensors may be placed in the vicinity of the outer circumference of a rotation element, such as flywheel, which rotates with the engine. The sensors monitor the passage of gear teeth, which are formed in the outer circumference of the rotation element and arranged at regular intervals in the circumferential direction. Moreover, the two sensors are placed such that the waveforms of their pulse signals which are generated in each passage of the gear teeth mutually have a phase difference. Here, the pulse output from each sensor is input to an operation circuit, and a deviation signal obtained by subtracting one signal from the other is output from the operation circuit. If the deviation signal is filtered by a filter device including a differential element, the output signal includes an excessive pulse waveform-caused by transient features. A process pulse signal, which is obtained by inputting the output signal to a comparison circuit, varies greatly depending on the rotational direction of the engine because of the excessive pulse, by which it is possible to detect the rotational direction of the engine.

Moreover, the rotational direction of the engine can be also detected by using a crankshaft angle sensor and a camshaft angle sensor. For example, two different crankshaft positions, which are detected by the crankshaft angle sensor for monitoring a crankshaft sensor wheel, are assigned to a predetermined camshaft position, which is detected by the camshaft angle sensor for monitoring a camshaft sensor wheel. The two crankshaft positions correspond to the normal rotation and reverse rotation of the engine, respectively. By knowing which crankshaft position is detected, it is possible to judge the rotational direction of the engine.

Moreover, the following aspect can be also used. Namely, in the outer circumference of a circular member, which is driven to rotate in synchronization with the rotation of the engine, two indicators are placed, with each indicator having a different angular width. A sensor is placed in the vicinity of the outer circumference of the circular member. This sensor generates such a pulse that has a time width corresponding to the angular width of each indicator. In such a construction, a ratio (a)/(b) varies depending on the rotational direction of the engine, wherein (a) is a time length from the end of a first pulse, whose time width is short, to the end of a second pulse, whose time width is long, and (b) is a time length from the end of the first pulse to the start of a next first pulse. Therefore, by comparing these, it is possible to judge the normal or reverse direction of the rotational direction of the engine.

Incidentally, the embodiment is constructed such that the start command for starting the engine 20 is output to the control apparatus 11 by pressing the accelerator pedal while a vehicle stops. As described above, however, such a case is also conceivable that the command for starting the engine 20 is output depending on the residual quantity of a battery as being a power source for the starter motor 12, independently of the step of the accelerator pedal, to thereby start the starter motor 12.

### Industrial Applicability

An engine starting apparatus and an engine starting method that are associated with the present invention can be applied to an internal combustion engine in a general vehicle, such as an automobile and a two-wheeled vehicle, whose power source is the engine.

## Claims

1. An engine starting apparatus (10) comprising:
a motor (12) for transmitting a torque to an engine (20) of a vehicle to rotate the engine (20);
a motor (12) controlling device (11) for prohibiting rotation of said motor (12) if the engine (20) runs in reverse rotation;
the engine starting apparatus (10) being **characterized by** further comprising:
a reverse-rotation estimating device for estimating, in advance, whether or not the engine (20) runs in the reverse rotation, the reverse-rotation estimating device having a compression-condition detecting device for detecting a compression condition of a gas in an arbitrary cylinder in the engine (20) and estimates whether or not the engine (20) runs in the reverse rotation on the basis of the compression condition obtained by a detection result by the compression-condition detecting device.

2. The engine starting apparatus (10) according to claim 1, wherein the compression-condition detecting device detects the compression condition of the gas on the basis of a rotation angle of a crankshaft (151) in the arbitrary cylinder.

3. The engine starting apparatus (10) according to claim 1, wherein said motor (12) controlling device (11) controls, in accordance with a start command, said motor (12) to start the engine (20) which is stopped while the vehicles stops.

4. The engine starting apparatus (10) according to claim 1, further comprising a transmission mechanism (100) for transmitting a torque from the motor (12) to the engine (20),
wherein the transmission mechanism (100) comprises:
a starter gear member including a starter gear (111) and a starter gear shaft (110);
a driven gear member including a driven gear (122) and a driven gear shaft (121);
an intermediate gear member including an intermediate gear (130) and an intermediate gear shaft (131);
a crank gear member including a crank gear (150) and a crank gear shaft (151);
and a one-way clutch (140),
wherein
the starter gear member transmits the torque from the starter motor (12) to the driven gear member,
the driven gear member transmits the torque from the starter motor (12) to the intermediate gear member,
the intermediate gear member transmits the torque from the driven gear member to the crank gear member,
the crank gear member transmits the torque from the intermediate gear member to the engine (20),
and wherein
the one-way clutch (140) is placed between the driven gear member and the intermediate gear member.

5. An engine starting method used for an engine (20) starting apparatus (10) comprising:
a motor (12) for transmitting a torque to an engine (20) of a vehicle to rotate the engine (20);
a motor (12) controlling device (11) for prohibiting rotation of said motor (12) if the engine (20) runs in reverse rotation; and
a reverse-rotation estimating device for estimating, in advance, whether or not the engine (20) runs in the reverse rotation, the reverse-rotation estimating device having a compression-condition detecting device for detecting a compression condition of a gas in an arbitrary cylinder in the engine (20),
said motor (12) controlling device (11) controlling, in accordance with a start command, said motor (12) to start the engine (20) which is stopped while the vehicles stops,
said engine (20) starting method comprising:
a first process of receiving (S 10) the start command;
a second process of judging (S20), on the basis of the compression condition obtained by a detection result by the compression-condition detecting device, whether or not the engine (20) runs in the reverse rotation if the start command is received; and
a third process of controlling (S30) said motor (12) to start the engine (20) if it is judged in said second process that the engine (20) does not run in the reverse rotation.

## Patentansprüche

1. Motorstartvorrichtung (10), aufweisend:
einen Motor (12) zum Übertragen eines Moments auf- eine Verbrennungskraftmaschine (20) eines Fahrzeugs, um die Verbrennungskraftmaschine (20) zu drehen;
eine Steuervorrichtung (11) für den Motor (12) zum Verhindern einer Rotation des Motors (12), wenn die Verbrennungskraftmaschine (20) rückwärts läuft;
wobei die Motorstartvorrichtung (10) **dadurch gekennzeichnet ist, dass** sie weiter aufweist:
eine Rückwärtsrotation-Schätzvorrichtung zum Bestimmen, im Voraus, ob die Verbrennungskraftmaschine (20) rückwärts läuft oder nicht, wobei die Rückwärtsrotation-Schätzvorrichtung eine Kompressionszustand-Erfassungsvorrichtung aufweist, um einen Kompressionszustand eines Gases in einem beliebigen Zylinder der Verbrennungskraftmaschine (20) zu erfassen, und basierend auf dem Kompressionszustand, der als Erfassungsergebnis von der Kompressionszustand-Erfassungsvorrichtung erhalten wurde, bestimmt, ob die Verbrennungskraftmaschine (20) rückwärts läuft oder nicht.

2. Motorstartvorrichtung (10) nach Anspruch 1, wobei die Kompressionszustand-Erfassungsvorrichtung den Kompressionszustand des Gases auf Basis des Rotationswinkels einer Kurbelwelle (151) in dem beliebigen Zylinder erfasst.

3. Motorstartvorrichtung (10) nach Anspruch 1, wobei die Steuervorrichtung (11) für den Motor (12) den Motor (12) gemäß einem Startbefehl steuert, um die Verbrennungskraftmaschine (20) zu starten, die gestoppt ist, während das Fahrzeug gestoppt ist.

4. Motorstartvorrichtung (10) nach Anspruch 1, ferner aufweisend einen Übertragungsmechanismus (100) zum Übertragen eines Moments vom Motor (12) auf die Verbrennungskraftmaschine (20),
wobei der Übertragungsmechanismus (100) aufweist:
ein Anlasserzahnradelement mit einem Anlasserzahnrad (111) und einer Anlasserzahnradwelle (110);
ein Abtriebszahnradelement mit einem Abtriebszahnrad (122) und einer Abtriebszahnradwelle (121);
ein Zwischenradelement mit einem Zwischenrad (130) und einer Zwischenradwelle (131);
ein Kurbelgetriebeelement mit einem Kurbelgetriebe (150) und einer Kurbelgetriebewelle (151); und
eine Einwegkupplung (140);
wobei
das Anlasserzahnradelement das Moment vom Startermotor (12) auf das Abtriebszahnradelement überträgt,
das Abtriebszahnradelement das Moment vom Startermotor (12) auf das Zwischenradelement überträgt,
das Zwischenradelement das Moment vom Abtriebszahnradelement auf das Kurbelgetriebeelement überträgt,
das Kurbelgetriebeelement das Moment vom Zwischenradelement auf die Verbrennungskraftmaschine (20) überträgt,
und wobei
die Einwegkupplung (140) zwischen dem Abtriebszahnradelement und dem Zwischenradelement angeordnet ist.

5. Motorstartverfahren, das für eine Startvorrichtung (10) für eine Verbrennungskraftmaschine (20) verwendet wird, die aufweist:
einen Motor (12) zum Übertragen eines Moments auf eine Verbrennungskraftmaschine (20) eines Fahrzeugs, um die Verbrennungskraftmaschine (20) zu drehen;
eine Steuervorrichtung (11) für den Motor (12) zum Verhindern einer Rotation des Motors (12), wenn die Verbrennungskraftmaschine (20) rückwärts läuft; und
eine Rückwärtsrotation-Schätzvorrichtung zum Bestimmen, im Voraus, ob die Verbrennungskraftmaschine (20) rückwärts läuft oder nicht, wobei die Rückwärtsrotation-Schätzvorrichtung eine Kompressionszustand-Erfassungsvorrichtung aufweist, um einen Kompressionszustand eines Gases in einem beliebigen Zylinder der Verbrennungskraftmaschine (20) zu erfassen,
wobei die Steuervorrichtung (11) für den Motor (12) den Motor (12) gemäß einem Startbefehl steuert, um die Verbrennungskraftmaschine (20) zu starten, die gestoppt ist, während das Fahrzeug gestoppt ist,
das Startverfahren für die Verbrennungskraftmaschine (20) weist auf:
einen ersten Prozess zum Empfangen (S 10) des Startbefehls;
einen zweiten Prozess zum Beurteilen (S20), auf Basis des Kompressionszustands, der als Erfassungsergebnis von der Kompressionszustand-Erfassungsvorrichtung erhalten wurde, ob die Verbrennungskraftmaschine (20) rückwärts läuft oder nicht, wenn der Startbefehl empfangen wurde; und
einen dritten Prozess zu Steuern (S30) des Motors (12) zum Starten der Verbrennungskraftmaschine (20), wenn in dem zweiten Prozess beurteilt wird, dass die Verbrennungskraftmaschine (20) nicht rückwärts läuft.

## Revendications

1. Appareil de démarrage de moteur (10) comportant :
un moteur (12) destiné à transmettre un couple à un moteur thermique (20) d'un véhicule afin de faire tourner le moteur thermique (20) ;
un dispositif de commande (11) de moteur (12) destiné à empêcher une rotation dudit moteur (12) si le moteur thermique (20) tourne dans le sens inverse ;
l'appareil de démarrage de moteur (10) étant **caractérisé en ce qu'**il comporte en outre :
un dispositif d'estimation de rotation dans le sens inverse destiné à estimer, à l'avance, si le moteur thermique (20) tourne dans le sens inverse ou non, le dispositif d'estimation de rotation dans le sens inverse ayant un dispositif de détection de condition de compression destiné à détecter une condition de compression d'un gaz dans un cylindre arbitraire dans le moteur thermique (20) et estime si le moteur thermique (20) tourne dans le sens inverse ou non sur la base de la condition de compression obtenue par un résultat de détection par le dispositif de détection de condition de compression.

2. Appareil de démarrage de moteur (10) selon la revendication 1, dans lequel le dispositif de détection de condition de compression détecte la condition de compression du gaz sur la base d'un angle de rotation d'un vilebrequin (151) dans le cylindre arbitraire.

3. Appareil de démarrage de moteur (10) selon la revendication 1, dans lequel ledit dispositif de commande (11) de moteur (12) commande, en fonction d'une commande de démarrage, ledit moteur (12) afin de démarrer le moteur thermique (20) qui est arrêté alors que le véhicule s'arrête.

4. Appareil de démarrage de moteur (10) selon la revendication 1, comportant en outre un mécanisme de transmission (100) destiné à transmettre un couple du moteur (12) au moteur thermique (20),
le mécanisme de transmission (100) comportant :
un élément de pignon de démarreur comprenant un pignon de démarreur (111) et un arbre de pignon de démarreur (110) ;
un élément de pignon entraîné comprenant un pignon entraîné (122) et un arbre de pignon entraîné (121) ;
un élément de pignon intermédiaire comprenant un pignon intermédiaire (130) et un arbre de pignon intermédiaire (131) ;
un élément de pignon de vilebrequin comprenant un pignon de vilebrequin (150) et un arbre de pignon de vilebrequin (151) ;
et un embrayage unidirectionnel (140),
dans lequel
l'élément de pignon de démarreur transmettant le couple du moteur de démarreur (12) à l'élément de pignon entraîné,
l'élément de pignon entraîné transmettant le couple du moteur de démarreur (12) à l'élément de pignon intermédiaire,
l'élément de pignon intermédiaire transmettant le couple de l'élément de pignon entraîné à l'élément de pignon de vilebrequin,
l'élément de pignon de vilebrequin transmettant le couple de l'élément de pignon intermédiaire au moteur thermique (20),
et dans lequel
l'embrayage unidirectionnel (140) étant placé entre l'élément de pignon entraîné et l'élément de pignon intermédiaire.

5. Procédé de démarrage de moteur utilisé pour un appareil de démarrage (10) de moteur thermique (20) comportant :
un moteur (12) destiné à transmettre un couple à un moteur thermique (20) d'un véhicule afin de faire tourner le moteur thermique (20) ;
un dispositif de commande (11) de moteur (12) destiné à empêcher une rotation dudit moteur (12) si le moteur thermique (20) tourne dans le sens inverse ;
un dispositif d'estimation de rotation dans le sens inverse destiné à estimer, à l'avance, si le moteur thermique (20) tourne dans le sens inverse ou non, le dispositif d'estimation de rotation dans le sens inverse ayant un dispositif de détection de condition de compression destiné à détecter une condition de compression d'un gaz dans un cylindre arbitraire dans le moteur thermique (20),
ledit dispositif de commande (11) de moteur (12) commandant, en fonction d'une commande de démarrage, ledit moteur (12) afin de démarrer le moteur thermique (20) qui est arrêté alors que le véhicule s'arrête,
ledit procédé de démarrage de moteur thermique (20) comportant :
un premier processus de réception (S10) de la commande de démarrage ;
un deuxième processus d'estimation (S20), sur la base de la condition de compression obtenu par un résultat de détection par le dispositif de détection de condition de compression, si le moteur thermique (20) tourne ou non dans le sens inverse si la commande de démarrage est reçue ; et
un troisième processus de commande (S30) dudit moteur (12) afin de démarrer le moteur thermique (20) si l'on estime dans ledit deuxième processus que le moteur thermique (20) ne tourne pas dans le sens inverse.
